# NEW EUROPEAN PATENT SPECIFICATION

(11) **EP 3 623 416 B2**
(45) Date of publication and mention of the opposition decision: **25.06.2025**
(45) Mention of the grant of the patent: 02.02.2022
(21) Application number: 19195531.9
(22) Date of filing: 05.09.2019
(51) Int. Cl.: C08L 9/00, B60C 1/00, C08K 7/02

(54) **TIRE RUBBER COMPOSITION AND TIRE**
REIFENKAUTSCHUKZUSAMMENSETZUNG UND REIFEN
COMPOSITION DE CAOUTCHOUC DE PNEU ET PNEU

(30) Priority: 12.09.2018 JP 2018170571
(43) Date of publication of application: 18.03.2020
(73) Proprietor: SUMITOMO RUBBER INDUSTRIES, LTD., Kobe-shi, Hyogo 651-0072 (JP)
(72) Inventor: YOSHIYASU, Hayato, Kobe-shi,, Hyogo 651-0072 (JP)
(74) Representative: Manitz Finsterwald Patent- und Rechtsanwaltspartnerschaft mbB

(56) References cited:
- EP-A1- 1 052 270
- EP-A1- 2 039 532
- EP-A1- 3 095 617
- WO-A1-2017/103191
- DE-T5- 112015 002 409
- JP-A- 2010 254 925
- JP-A- 2011 231 204
- JP-A- 2011 231 205

## Description

### BACKGROUND OF THE INVENTION

### Field of the Invention

The present invention relates to a tire rubber composition, a method for producing the same, and a tire including a tire member formed from the rubber composition.

### Description of the Background Art

It has been known that, if microfibrillated plant fibers such as cellulose fibers are blended as a filler in a rubber composition, the rubber composition is reinforced and has an increased modulus (complex elastic modulus). However, microfibrillated plant fibers have high self-cohesive force and also have low compatibility with a rubber component.

As countermeasures against this drawback, methods have been disclosed in which microfibrillated plant fibers are chemically denatured so that the compatibility between a rubber component and the microfibrillated plant fibers is improved (see, for example, Japanese Patent No. 4581116). In addition, methods have been disclosed in which cellulose fibers having an average fiber diameter of 1 to 200 nm and a carboxyl group, or denatured fine cellulose fibers obtained by treating, with a hydrophobic denaturing agent having a hydrocarbon group, fine cellulose fibers having an average fiber diameter of 0.1 to 200 nm and a carboxyl group, are blended in rubber so that the dispersibility of the cellulose fibers in the rubber is improved (see, for example, Japanese Laid-Open Patent Publication No. 2013-18918 and Japanese Laid-Open Patent Publication No. 2014-125607).

Although technologies for improving the affinity for rubber by denaturing microfibrillated plant fibers have been proposed as described above, no technologies for improving the affinity with use of a modifier have been disclosed yet.

Further, DE 11 2015 002409 T5 discloses a rubber composition for a tire comprising 100 parts by mass of a diene-based rubber, 30-100 parts by mass of a filler, 0.3-30 parts by mass of a cross-linking constituent not compatible with the diene-based rubber, and a fibrillated fiber. EP 3 095 617 A1 discloses a rubber composition containing: a modified cellulose fiber; a dispersing polymer; and a rubber component.

### SUMMARY OF THE INVENTION

The present invention has been made to solve the above problem, and an object of the present invention is to provide a tire comprising a tire member formed from a tire rubber composition and the like that allow microfibrillated plant fibers to have excellent dispersibility and that enable improvement in tensile properties and low fuel consumption performance.

The present invention is directed to a tire comprising a tire member formed from a tire rubber composition containing: a rubber component; microfibrillated plant fibers; and a modifier capable of being covalently bonded to the microfibrillated plant fibers. The modifier has a reactive point that is reactive with diene rubber.

An amount of the microfibrillated plant fibers per 100 parts by mass of the rubber component is 1 to 50 parts by mass, and an amount of the modifier per 100 parts by mass of the rubber component is 2 to 20 parts by mass.

The modifier is preferably a liquid polymer.

The liquid polymer is preferably a denatured liquid polymer obtained by denaturation with an unsaturated carboxylic acid and/or a derivative thereof.

The present invention is directed to a method for producing a tire rubber composition, the method including the steps of: kneading a rubber component, microfibrillated plant fibers, and a modifier capable of being covalently bonded to the microfibrillated plant fibers, to produce a kneaded product in which covalent bonds are formed between the modifier and the microfibrillated plant fibers; and performing vulcanization.

The present invention is directed to a tire including a tire member formed from the rubber composition.

According to the present invention, since the tire rubber composition contains the rubber component, the microfibrillated plant fibers, and the modifier capable of being covalently bonded to the microfibrillated plant fibers, the microfibrillated plant fibers have excellent dispersibility, and the tensile properties and the low fuel consumption performance can be improved.

### DESCRIPTION OF THE PREFERRED EMBODIMENTS

A tire rubber composition according to the present invention contains a rubber component, microfibrillated plant fibers, and a modifier capable of being covalently bonded to the microfibrillated plant fibers. In the rubber composition, the microfibrillated plant fibers have excellent dispersibility, and the tensile properties (the tensile strength and the elongation at break) and the low fuel consumption performance are significantly improved. In addition, favorable processability and hardness are also obtained.

The reason why such advantageous effects are obtained is not clear, but is inferred as described below.

Firstly, if microfibrillated plant fibers and a modifier capable of being covalently bonded thereto are used, a material in which covalent bonds are formed between the modifier and the plant fibers is obtained during, for example, kneading of these raw materials, and the modifier in this material allows improvement in the dispersibility of the microfibrillated plant fibers in a rubber component. Furthermore, when the material in which the covalent bonds are formed, a vulcanizing agent (sulfur or the like), and the like are kneaded and vulcanization is performed, the modifier covalently bonded to the microfibrillated plant fibers is further crosslinked with the rubber component via the vulcanizing agent (sulfur or the like). Accordingly, a material in which the plant fibers, the modifier, the vulcanizing agent (sulfur or the like), and the rubber component are bound to each other is formed, thereby improving the tensile properties and the low fuel consumption performance. For the above reasons, the microfibrillated plant fibers have excellent dispersibility, and the tensile properties and the low fuel consumption performance are significantly improved. In addition, favorable processability and hardness are also obtained.

As the rubber component, any rubber that is generally used in the rubber industry can be used. For example, diene rubbers (diene polymers) such as natural rubber (NR), epoxidized natural rubber (ENR), hydrogenated natural rubber, isoprene rubber (IR), butadiene rubber (BR), styrene-butadiene rubber (SBR), styrene-isoprene-butadiene rubber (SIBR), acrylonitrile-butadiene rubber (NBR), and chloroprene rubber (CR) are preferable. Examples of the rubber component further include butyl-based rubbers such as halogenated isobutylene-isoprene rubber (X-IIR) and isobutylene-isoprene rubber (IIR). One of these rubber components may be used, or two or more of these rubber components may be used in combination. Among them, isoprene-based rubbers (NR, ENR, hydrogenated natural rubber, IR, and the like), SBR, and BR are preferable.

SBR and BR may be unmodified diene rubber or modified diene rubber.

The modified diene rubber only has to be a diene rubber having a functional group that interacts with a filler such as silica, and examples of the diene rubber include end-modified diene rubber obtained by modifying at least one end of diene rubber with a compound (modifying agent) having the above functional group (end-modified diene rubber having the above functional group at an end thereof), main chain-modified diene rubber having the above functional group in the main chain thereof, main chain/end-modified diene rubber having the above functional group in the main chain and at an end thereof (for example, main chain/end-modified diene rubber that has the above functional group in the main chain thereof and in which at least one end thereof is modified with the above modifying agent), and end-modified diene rubber that is modified (coupled) with a multifunctional compound having two or more epoxy groups in the molecule thereof and to which a hydroxyl group or an epoxy group is introduced.

Examples of the above functional group include an amino group, an amide group, a silyl group, an alkoxysilyl group, an isocyanate group, an imino group, an imidazole group, a urea group, an ether group, a carbonyl group, an oxycarbonyl group, a mercapto group, a sulfide group, a disulfide group, a sulfonyl group, a sulfinyl group, a thiocarbonyl group, an ammonium group, an imide group, a hydrazo group, an azo group, a diazo group, a carboxyl group, a nitrile group, a pyridyl group, an alkoxy group, a hydroxyl group, an oxy group, and an epoxy group. These functional groups may have a substituent. Among them, an amino group (preferably, an amino group obtained by substituting a hydrogen atom of an amino group with an alkyl group having 1 to 6 carbon atoms), an alkoxy group (preferably, an alkoxy group having 1 to 6 carbon atoms), and an alkoxysilyl group (preferably, an alkoxysilyl group having 1 to 6 carbon atoms), are preferable.

The SBR is not particularly limited, and, for example, emulsion-polymerized styrene-butadiene rubber (E-SBR), solution-polymerized styrene-butadiene rubber (S-SBR), and the like can be used. These SBRs may be used singly, or two or more of these SBRs may be used in combination.

The BR is not particularly limited, and, for example, high-cis BR having a high cis content, BR containing syndiotactic polybutadiene crystal, BR synthesized with use of a rare earth catalyst (rare earth BR), and the like can be used. These BRs may be used singly, or two or more of these BRs may be used in combination. Among them, high-cis BR having a cis content not less than 90% by mass is preferable since such BR allows improvement in wear resistance.

As a supply source of the above rubber component, rubber latex (in this case, a rubber solid component contained in the rubber latex corresponds to the rubber component) can be suitably used. As the rubber latex, for example, diene rubber latexes such as natural rubber latex, reformed natural rubber latexes (saponified natural rubber latex, epoxidized natural rubber latex, and the like), and synthesized diene rubber latexes (latexes of butadiene rubber (BR), styrene-butadiene rubber (SBR), styrene-isoprene-butadiene rubber (SIBR), isoprene rubber (IR), acrylonitrile-butadiene rubber, ethylene-vinyl acetate rubber, chloroprene rubber, vinylpyridine rubber, butyl rubber, and the like), can be suitably used. These rubber latexes may be used singly, or two or more of these rubber latexes may be used in combination. Among them, natural rubber latex, SBR latex, BR latex, and IR latex are suitably used as supply sources to obtain therefrom natural rubber, SBR, BR, and IR.

The pH of the above rubber latex is preferably not less than 8.5 and more preferably not less than 9.5. If the pH is not less than 8.5, the rubber latex tends to be likely to become stable and unlikely to solidify. Meanwhile, the pH of the above rubber latex is preferably not greater than 12 and more preferably not greater than 11. If the pH is not greater than 12, the rubber latex tends to be unlikely to deteriorate.

The above rubber latex can be prepared by a conventionally known preparation method, and various commercially available products can also be used. As the rubber latex, a rubber latex having a rubber solid content of 10 to 80% by mass is preferably used. The rubber solid content is more preferably not less than 20% by mass and not greater than 60% by mass.

Natural rubber latex is collected as sap of natural rubber trees such as Hevea trees and contains, in addition to rubber components, water, proteins, lipids, inorganic salts, and the like, and a gel component in the rubber is considered to be based on a complex of various impurities. In the present invention, as the natural rubber latex, raw latex (field latex) collected by tapping Hevea trees, and concentrated latex obtained by condensing raw latex by a centrifugal separation method or a creaming method (refined latex, high-ammonia latex obtained by adding ammonia by an ordinary method, LATZ latex stabilized with zinc oxide, TMTD, and ammonia, and the like), and the like can be used.

Emulsion-polymerized styrene-butadiene rubber latex (E-SBR latex) can be used as the SBR latex, emulsion-polymerized butadiene rubber latex (E-BR latex) can be used as the BR latex, and emulsion-polymerized isoprene rubber latex (E-IR latex) can be used as the IR latex. E-SBR latex, E-BR latex, and E-IR latex can be prepared by a conventionally known preparation method, and various commercially available products can also be used.

As described above, at least one of isoprene-based rubber, BR, and SBR is preferably used for the rubber composition. From the viewpoints of tensile properties, low fuel consumption performance, processability, and hardness, the total amount of isoprene-based rubber, BR, and SBR in 100% by mass of the rubber component is preferably not less than 80% by mass, more preferably not less than 90% by mass, and further preferably not less than 95% by mass, and may be 100% by mass.

In a case where the rubber composition is used for sidewalls, isoprene-based rubber and BR are preferably used as the rubber component since favorable flex crack growth resistance is obtained.

In the case where the rubber composition is used for sidewalls, the amount of isoprene-based rubber in 100% by mass of the rubber component is preferably not less than 20% by mass, more preferably not less than 40% by mass, and further preferably not less than 60% by mass. If the amount is set to be not less than the lower limit, excellent low fuel consumption performance tends to be obtained. Meanwhile, the amount is preferably not greater than 80% by mass, more preferably not greater than 70% by mass, and further preferably not greater than 65% by mass. If the amount is set to be not greater than the upper limit, favorable flex crack growth resistance tends to be obtained.

In the case where the rubber composition is used for sidewalls, the amount of BR in 100% by mass of the rubber component is preferably not less than 20% by mass, more preferably not less than 30% by mass, and further preferably not less than 35% by mass, from the viewpoint of exhibition of required low fuel consumption performance and flex crack growth resistance. Meanwhile, the amount is preferably not greater than 90% by mass, more preferably not greater than 70% by mass, and further preferably not greater than 55% by mass, from the viewpoint of processability.

In a case where the rubber composition is used for the tread of a tire for a passenger car, SBR and BR are preferably used.

In the case where the rubber composition is used for the tread of a tire for a passenger car, the amount of SBR in 100% by mass of the rubber component is preferably not less than 40% by mass, more preferably not less than 50% by mass, and further preferably not less than 60% by mass. If the amount is set to be not less than the lower limit, sufficient grip performance tends to be obtained. Meanwhile, the amount of the above SBR is preferably not greater than 90% by mass and more preferably not greater than 80% by mass. If the amount is set to be not greater than the upper limit, favorable low fuel consumption performance tends to be obtained.

In the case where the rubber composition is used for the tread of a tire for a passenger car, the amount of BR in 100% by mass of the rubber component is preferably not less than 5% by mass, more preferably not less than 10% by mass, and further preferably not less than 20% by mass. If the amount is set to be not less than the lower limit, excellent low fuel consumption performance tends to be obtained. Meanwhile, the amount is preferably not greater than 80% by mass, more preferably not greater than 60% by mass, and further preferably not greater than 40% by mass. If the amount is set to be not greater than the upper limit, favorable grip performance tends to be obtained.

In a case where the rubber composition is used for the tread of a heavy-duty tire, isoprene-based rubber is preferably used.

In the case where the rubber composition is used for the tread of a heavy-duty tire, the amount of isoprene-based rubber in 100% by mass of the rubber component is preferably not less than 50% by mass, more preferably not less than 75% by mass, and further preferably not less than 90% by mass, and may be 100% by mass, from the viewpoints of wear resistance, durability, and the like.

As the above microfibrillated plant fibers, cellulose microfibrils are preferable since favorable reinforcing properties are obtained. The cellulose microfibrils are not particularly limited as long as being derived from a natural substance, and examples of the cellulose microfibrils include cellulose microfibrils derived from: resource biomass such as fruit, grain, and root crop; wood, bamboo, hemp, jute, and kenaf, and pulp, paper, and cloth formed from these raw materials; waste biomass such as farm produce wastes, food wastes, and sewage sludge; unused biomass such as rice straw, wheat straw, and timber from forest thinning; and moreover, celluloses produced by ascidians, acetic acid bacteria, and the like. One of these kinds of microfibrillated plant fibers may be used, or two or more of these kinds of microfibrillated plant fibers may be used in combination.

In the present specification, the cellulose microfibrils typically mean cellulose fibers that have an average fiber diameter not greater than 10 µm, and more typically mean cellulose fibers that are formed by aggregation of cellulose molecules and that have a microstructure having an average fiber diameter not greater than 500 nm. Typical cellulose microfibrils can be formed as, for example, an aggregate of such cellulose fibers having any of the above average fiber diameters.

A method for producing the above microfibrillated plant fibers is not particularly limited, and examples of the method include methods in which a raw material of the above cellulose microfibrils is chemically treated, as necessary, with an alkali such as sodium hydroxide, and then, mechanically ground or beaten with a refiner, a twin-screw kneader (twin-screw extruder), a twin-screw kneading extruder, a high-pressure homogenizer, a medium-agitating mill, a stone mill, a grinder, a vibration mill, a sand grinder, or the like. In these methods, lignin is separated from the raw material by the chemical treatment, and thus microfibrillated plant fibers that contain substantially no lignin are obtained. In addition, examples of another method include a method in which a raw material of the above cellulose microfibrils is subjected to ultra-high pressure treatment.

As the above microfibrillated plant fibers, for example, products of SUGINO MACHINE LIMITED, etc., can be used.

As the microfibrillated plant fibers, the following chemically denatured microfibrillated plant fibers can also be used: chemically denatured microfibrillated plant fibers obtained by the microfibrillated plant fibers, which have been obtained by any of the above production methods, being further subjected to oxidation treatment, any of various types of chemical denaturation treatment, etc.; chemically denatured microfibrillated plant fibers obtained by performing oxidation treatment, any of various types of chemical denaturation treatment, etc., on a natural substance (for example, wood, pulp, bamboo, hemp, jute, kenaf, farm produce wastes, cloth, paper, ascidian cellulose, or the like), as a cellulose raw material, from which the above cellulose microfibrils can be derived, and then defibrating, as necessary, the treated natural substance; and chemically denatured microfibrillated plant fibers obtained by a liquid, in which the microfibrillated plant fibers have been dispersed, being further subjected to oxidation treatment, any of various types of chemical denaturation treatment, etc.

Examples of the types of the chemical denaturation of the microfibrillated plant fibers include esterification, etherification, and acetalization. More specifically, preferable examples of the types include acylations such as acetylation, cyanoethylation, amination, sulfone esterification, phosphoric acid esterification, alkyl esterification, alkyl etherification, complex esterification, β-ketoesterification, alkylations such as butylation, and chlorination. The preferable examples further include alkyl carbamation and aryl carbamation. Each of the chemical denaturation treatments is a treatment for hydrophobizing the microfibrillated plant fibers. If fibers subjected to such chemical denaturation treatment are used as the microfibrillated plant fibers, the microfibrillated plant fibers have improved dispersibility.

In the above chemically denatured microfibrillated plant fibers, a degree of substitution is preferably within a range of 0.2 to 2.5 as a result of the chemical denaturation. Here, the degree of substitution means the average number, per unit glucose ring, of hydroxyl groups substituted by other functional groups through the chemical denaturation among the hydroxyl groups of cellulose, and the theoretical maximum value of the degree of substitution is 3. If the degree of substitution is not less than 0.2, the chemically denatured microfibrillated plant fibers have particularly favorable dispersibility, and meanwhile, if the degree of substitution is not greater than 2.5, the chemically denatured microfibrillated plant fibers have particularly excellent dispersibility and particularly excellent flexibility, whereby the aforementioned advantageous effects are suitably obtained. The degree of substitution is more preferably within a range of 0.3 to 2.5, further preferably within a range of 0.4 to 2.3, and particularly preferably within a range of 0.4 to 2.0.

In a case where the above chemically denatured microfibrillated plant fibers are formed of a combination of two or more kinds of fibers, the above degree of substitution is calculated as the average degree of substitution in all the kinds of the chemically denatured microfibrillated plant fibers.

The degree of substitution in the above chemically denatured microfibrillated plant fibers can be obtained by, for example, measurement such as titrimetry using 0.5 N NaOH and 0.2 N HCl, NMR, or infrared absorption spectrometry.

In a case where the above chemically denatured microfibrillated plant fibers are acetylated microfibrillated plant fibers, the degree of substitution is preferably within a range of 0.3 to 2.5. In a case where the above chemically denatured microfibrillated plant fibers are aminated microfibrillated plant fibers, the degree of substitution is preferably within a range of 0.3 to 2.5. In a case where the above chemically denatured microfibrillated plant fibers are sulfone-esterified microfibrillated plant fibers, the degree of substitution is preferably within a range of 0.3 to 1.8. In a case where the above chemically denatured microfibrillated plant fibers are alkyl-esterified cellulose microfibrils, the degree of substitution is preferably within a range of 0.3 to 1.8. In a case where the above chemically denatured microfibrillated plant fibers are complex-esterified cellulose microfibrils, the degree of substitution is preferably within a range of 0.4 to 1.8. In a case where the above chemically denatured microfibrillated plant fibers are β-ketoesterified cellulose microfibrils, the degree of substitution is preferably within a range of 0.3 to 1.8. In a case where the above chemically denatured microfibrillated plant fibers are alkyl-carbamated cellulose microfibrils, the degree of substitution is preferably within a range of 0.3 to 1.8. In a case where the above chemically denatured microfibrillated plant fibers are aryl carbamated cellulose microfibrils, the degree of substitution is preferably within a range of 0.3 to 1.8.

The above acetylation can be performed by, for example, a method in which acetic acid, concentrated sulfuric acid, and acetic anhydride are added to the microfibrillated plant fibers so that a reaction occurs. More specifically, the above acetylation can be performed by, for example, conventionally known methods such as a method in which, in a mixed solvent of acetic acid and toluene, the microfibrillated plant fibers and acetic anhydride are caused to react with each other in the presence of a sulfuric acid catalyst so that an acetylation reaction is progressed, and then the solvent is substituted by water.

The above amination can be performed by, for example, known methods such as a method in which the microfibrillated plant fibers are tosyl-esterified, and then, caused to react with an alkylamine in an alcohol so that a nucleophilic substitution reaction is caused.

The above sulfone esterification can be performed by, for example, a simple operation that merely involves dissolving the microfibrillated plant fibers in sulfuric acid and putting the solution into water. Besides, the sulfone esterification can be performed by, for example, methods that involve sulfuric anhydride gas treatment, and treatment with chlorosulfonic acid and pyridine.

The above phosphoric acid esterification can be performed by, for example, a method in which the microfibrillated plant fibers having been subjected to dimethylamine treatment or the like are treated with phosphoric acid and urea.

The above alkyl esterification can be performed by, for example, the Schotten-Baumann method in which a reaction of the microfibrillated plant fibers is caused with use of a carboxylic acid chloride under a basic condition. In addition, the above alkyl etherification can be performed by, for example, the Williamson method in which a reaction of the microfibrillated plant fibers is caused with use of an alkyl halide under a basic condition.

The above chlorination can be performed by, for example, a method in which thionyl chloride is added in DMF (dimethylformamide) and heating is performed.

The above complex esterification can be performed by, for example, a method in which two or more kinds of carboxylic acid anhydrides or carboxylic acid chlorides are caused to react with the microfibrillated plant fibers under a basic condition.

The above β-ketoesterification can be performed by, for example, a method in which diketene or an alkyl ketene dimer is caused to react with the microfibrillated plant fibers, or a transesterification reaction between the microfibrillated plant fibers and a β-ketoester compound such as an alkyl acetoacetate.

The above alkyl carbamation can be performed by, for example, a method in which an alkyl isocyanate is caused to react with the microfibrillated plant fibers in the presence of a basic catalyst or a tin catalyst.

The above aryl carbamation can be performed by, for example, a method in which an aryl isocyanate is caused to react with the microfibrillated plant fibers in the presence of a basic catalyst or a tin catalyst.

Examples of types of the oxidation treatment of the above microfibrillated plant fibers include oxidation treatment using an N-oxyl compound. The oxidation treatment using an N-oxyl compound can be performed by, for example, a method in which a co-oxidant is caused to act on the microfibrillated plant fibers with the N-oxyl compound being used as an oxidation catalyst in water.

Examples of the above N-oxyl compound include 2,2,6,6-tetramethylpiperidine-1-oxyl (TEMPO) and derivatives thereof.

Examples of the above co-oxidant include sodium hypochlorite.

The average fiber diameter of the above microfibrillated plant fibers is preferably 4 to 100 nm. If the average fiber diameter is within the above range, the dispersibility of the microfibrillated plant fibers can be made sufficiently favorable, whereby the aforementioned advantageous effects are obtained. In addition, breakage of the microfibrillated plant fibers during processing is also suppressed. From the viewpoints of the aforementioned advantageous effects, the average fiber diameter is preferably not greater than 90 nm and more preferably not greater than 50 nm. Meanwhile, the average fiber diameter is preferably not less than 10 nm and more preferably not less than 20 nm for the reasons that, otherwise, entwined microfibrillated plant fibers are not easily disentangled and are unlikely to be dispersed.

The average fiber length of the above microfibrillated plant fibers is preferably not less than 100 nm. The average fiber length is more preferably not less than 300 nm and further preferably not less than 500 nm. Meanwhile, the average fiber length is preferably not greater than 5 mm, more preferably not greater than 1 mm, further preferably not greater than 50 µm, particularly preferably not greater than 3 µm, and most preferably not greater than 2 µm. If the average fiber length is not less than the lower limit and not greater than the upper limit, the same tendencies as those of the aforementioned average fiber diameter are observed.

In a case where the above microfibrillated plant fibers are formed of a combination of two or more kinds of fibers, the above average fiber diameter and the above average fiber length are calculated as the average fiber diameter and the average fiber length of all the kinds of the microfibrillated plant fibers.

In the present specification, the average fiber diameter and the average fiber length of the above microfibrillated plant fibers can be measured by image analysis using a scanning electron photomicrograph, image analysis using a transmission electron photomicrograph, image analysis using an atomic force photomicrograph, X-ray scattering data analysis, the pore electrical resistance method (Coulter principle method), and the like.

The amount (solid content) of the microfibrillated plant fibers per 100 parts by mass of the rubber component in the above rubber composition is not less than 1 part by mass, more preferably not less than 5 parts by mass, and further preferably not less than 10 parts by mass. Meanwhile, the amount (solid content) is not greater than 50 parts by mass, more preferably not greater than 40 parts by mass, and further preferably not greater than 30 parts by mass. If the amount (solid content) is within the above range, the aforementioned advantageous effects are suitably obtained.

The average fiber diameter of the microfibrillated plant fibers in the above rubber composition is preferably 4 to 100 nm. If the average fiber diameter is within the above range, the dispersibility of the microfibrillated plant fibers in the rubber composition becomes favorable, and the aforementioned advantageous effects tend to be obtained. In addition, breakage of the microfibrillated plant fibers during processing also tends to be suppressed. The average fiber diameter is preferably not greater than 90 nm since the aforementioned advantageous effects are suitably obtained. Meanwhile, the average fiber diameter is preferably not less than 10 nm and more preferably not less than 20 nm for the reasons that, otherwise, entwined microfibrillated plant fibers are not easily separated and are unlikely to be dispersed.

The average fiber length of the microfibrillated plant fibers in the above rubber composition is preferably not less than 100 nm. The average fiber length is more preferably not less than 300 nm and further preferably not less than 500 nm. Meanwhile, the average fiber length is preferably not greater than 5 mm, more preferably not greater than 1 mm, further preferably not greater than 50 µm, particularly preferably not greater than 3 µm, and most preferably not greater than 2 µm. If the average fiber length is not less than the lower limit and not greater than the upper limit, the same tendencies as those of the aforementioned average fiber diameter are observed.

The mode among the fiber diameters of the microfibrillated plant fibers in the above rubber composition is preferably 10 to 70 nm. If the mode is within the above range, the dispersibility of the microfibrillated plant fibers in the rubber composition becomes favorable, and the aforementioned advantageous effects tend to be obtained. The mode among the fiber diameters is preferably not less than 15 nm and more preferably not less than 18 nm since the aforementioned advantageous effects are suitably obtained. Meanwhile, the mode is preferably not greater than 65 nm and more preferably not greater than 60 nm.

In the present specification, the mode among the fiber diameters of the above microfibrillated plant fibers refers to a value that is obtained from a distribution acquired by measuring the diameters of 100 fibers in an image taken through observation with a transmission electron microscope.

The rubber composition contains a modifier capable of being covalently bonded to the microfibrillated plant fibers. The modifier is a compound that can form covalent bonds with the microfibrillated plant fibers.

The amount of the modifier per 100 parts by mass of the rubber component in the rubber composition is not less than 2 parts by mass, and further preferably not less than 3 parts by mass. Meanwhile, the amount is not greater than 20 parts by mass, more preferably not greater than 18 parts by mass, and further preferably not greater than 16 parts by mass. If the amount is within the above range, the aforementioned advantageous effects are suitably obtained.

As the modifier, for example, a liquid polymer can be suitably used since such a polymer allows the microfibrillated plant fibers to be favorably dispersed in rubber.

The number-average molecular weight (Mn) of the liquid polymer is preferably not less than 1000, more preferably not less than 5000, and further preferably not less than 10000, from the viewpoint of the mechanical properties of the rubber composition. Meanwhile, the Mn is preferably not greater than 70000 and more preferably not greater than 50000, from the viewpoint of processability.

In the present specification, Mw and Mn can be obtained by conversion, based on polystyrene standard, of a value measured by gel permeation chromatography (GPC) (GPC-8000 series manufactured by Tosoh Corporation, detector: differential refractometer, column: TSKGEL SUPERMULTIPORE HZ-M manufactured by Tosoh Corporation).

Examples of the liquid polymer include undenatured liquid polymers and denatured liquid polymers. Among them, denatured liquid polymers are preferably used, and denatured liquid polymers obtained by denaturing undenatured liquid polymers with an unsaturated carboxylic acid and/or a derivative thereof are particularly preferably used.

The undenatured liquid polymers are undenatured liquid polymers (liquid diene polymers) obtained by polymerizing monomers mainly including conjugated dienes such as 1,3-butadiene, isoprene, 1,3-pentadiene, 2,3-dimethyl-1,3-butadiene, 2-methyl-1,3-pentadiene, 1,3-hexadiene, 4,5-diethyl-1,3-octadiene, and 3-butyl-1,3-octadiene. Examples of the undenatured liquid polymers include liquid diene polymers such as liquid polybutadiene, liquid polyisoprene, liquid styrene-butadiene random copolymers, liquid styrene-butadiene block copolymers, liquid butadiene-isoprene random copolymers, liquid butadiene-isoprene block copolymers, liquid styrene-butadiene-isoprene random copolymers, and liquid styrene-butadiene-isoprene block copolymers. One of these undenatured liquid polymers may be used, or two or more of these undenatured liquid polymers may be mixed with each other. Among them, liquid polyisoprene is preferable from the viewpoints of the aforementioned advantageous effects.

Examples of the above unsaturated carboxylic acid include maleic acid, fumaric acid, itaconic acid, and (meth)acrylic acid. Examples of the derivatives of the above unsaturated carboxylic acids include: unsaturated carboxylic acid anhydrides such as maleic anhydride and itaconic anhydride; unsaturated carboxylic acid esters such as maleic acid esters, fumaric acid esters, itaconic acid esters, glycidyl (meth)acrylates, and hydroxyethyl (meth)acrylates; unsaturated carboxylic acid amides such as maleic acid amide, fumaric acid amide, and itaconic acid amide; unsaturated carboxylic acid imides such as maleic acid imide and itaconic acid imide; and the like. The denaturation may be made with one of the unsaturated carboxylic acids and the derivatives of the unsaturated carboxylic acids, or two or more of the unsaturated carboxylic acids and the derivatives of the unsaturated carboxylic acids.

Denatured liquid polymers can be produced by denaturing, with unsaturated carboxylic acids and/or derivatives thereof, undenatured liquid polymers which are raw materials. The method for the denaturation is not particularly limited, and, for example, a denatured liquid polymer can be produced by known methods such as a method in which an unsaturated carboxylic acid and/or a derivative thereof is added to an undenatured liquid polymer which is a raw material. One kind of denatured liquid polymer may be used, or two or more kinds of denatured liquid polymers may be mixed with each other.

Among them, maleic anhydride-denatured liquid polymers are preferable, maleic anhydride-denatured liquid diene polymers are more preferable, and maleic anhydride-denatured liquid polyisoprenes are further preferable, from the viewpoint of cost and from the viewpoints of the aforementioned advantageous effects regarding tensile properties, low fuel consumption performance, and the like.

The modifier capable of being covalently bonded to the microfibrillated plant fibers has a reactive point that is reactive with diene rubber. In a case where a modifier having a reactive point that is reactive with diene rubber is used, for example, the modifier is bound to diene rubber via a vulcanizing agent (sulfur or the like) at the time of vulcanization, whereby the strength is improved. Accordingly, the dispersibility of the microfibrillated plant fibers is improved, and the tensile properties (the tensile strength and the elongation at break) and the low fuel consumption performance are significantly improved.

The reactive point that is reactive with diene rubber (diene polymer) refers to a site (moiety) capable of reacting with diene rubber, and may be, as necessary, a site (moiety) that is to react with diene rubber via a vulcanizing agent (sulfur or the like). Examples of the reactive point that is reactive with diene rubber include double bond moieties of the aforementioned conjugated dienes. In this case, the double bond moiety of the modifier may be caused to react with diene rubber, or the double bond moiety of the modifier may be caused to react with diene rubber via sulfur.

As the above liquid polymer, for example, products of KURARAY CO., LTD., Cray Valley, etc., can be used.

The rubber composition preferably contains carbon black. If carbon black is blended therein, a reinforcing effect is obtained.

The carbon black is not particularly limited, and examples thereof include GPF, FEF, HAF, ISAF, and SAF. These carbon blacks may be used singly, or two or more of these carbon blacks may be used in combination.

The nitrogen adsorption specific surface area (N₂SA) of the carbon black in the rubber composition is preferably not less than 20 m²/g and more preferably not less than 25 m²/g. Meanwhile, the N₂SA is preferably not greater than 200 m²/g, more preferably not greater than 150 m²/g, and further preferably not greater than 120 m²/g. If the N₂SA is set to be not less than the lower limit, a sufficient reinforcing effect tends to be obtained. If the N₂SA is set to be not greater than the upper limit, excellent low fuel consumption performance tends to be obtained.

In the present specification, the nitrogen adsorption specific surface area of the carbon black is obtained by Method A of JIS K 6217.

The amount of the carbon black per 100 parts by mass of the rubber component in the rubber composition is preferably 1 to 200 parts by mass and more preferably 3 to 100 parts by mass, from the viewpoints of the aforementioned advantageous effects.

In the case where the rubber composition is used for sidewalls, the amount of the carbon black per 100 parts by mass of the rubber component is preferably not less than 5 parts by mass, more preferably not less than 15 parts by mass, and further preferably not less than 20 parts by mass. Meanwhile, the amount is preferably not greater than 100 parts by mass, more preferably not greater than 70 parts by mass, and further preferably not greater than 50 parts by mass. If the amount is within the above the range, favorable low fuel consumption performance and flex crack growth resistance tend to be obtained.

In the case where the rubber composition is used for sidewalls, the nitrogen adsorption specific surface area (N₂SA) of the carbon black is preferably not less than 20 m²/g and more preferably not less than 30 m²/g. Meanwhile, the N₂SA is preferably not greater than 200 m²/g and more preferably not greater than 150 m²/g. If the N₂SA is set to be not less than the lower limit, a sufficient reinforcing effect tends to be obtained. If the N₂SA is set to be not greater than the upper limit, excellent low fuel consumption performance tends to be obtained.

In the case where the rubber composition is used for the tread of a tire for a passenger car, the amount of the carbon black per 100 parts by mass of the rubber component is preferably not less than 1 part by mass and more preferably not less than 2 parts by mass. Meanwhile, the amount is preferably not greater than 50 parts by mass, more preferably not greater than 30 parts by mass, and further preferably not greater than 10 parts by mass. If the amount is within the above range, favorable low fuel consumption performance tends to be obtained.

In the case where the rubber composition is used for the tread of a tire for a passenger car, the nitrogen adsorption specific surface area (N₂SA) of the carbon black is preferably not less than 50 m²/g, more preferably not less than 80 m²/g, and further preferably not less than 100 m²/g. Meanwhile, the N₂SA is preferably not greater than 200 m²/g and more preferably not greater than 150 m²/g. If the N₂SA is set to be not less than the lower limit, a sufficient reinforcing effect tends to be obtained. If the N₂SA is set to be not greater than the upper limit, excellent low fuel consumption performance tends to be obtained.

In the case where the rubber composition is used for the tread of a heavy-duty tire, the amount of the carbon black per 100 parts by mass of the rubber component is preferably not less than 10 parts by mass, more preferably not less than 30 parts by mass, and further preferably not less than 40 parts by mass. Meanwhile, the amount is preferably not greater than 150 parts by mass, more preferably not greater than 100 parts by mass, and further preferably not greater than 80 parts by mass. If the amount is within the above range, favorable low fuel consumption performance tends to be obtained.

In the case where the rubber composition is used for the tread of a heavy-duty tire, the nitrogen adsorption specific surface area (N₂SA) of the carbon black is preferably not less than 50 m²/g, more preferably not less than 80 m²/g, and further preferably not less than 100 m²/g. Meanwhile, the N₂SA is preferably not greater than 200 m²/g and more preferably not greater than 150 m²/g. If the N₂SA is set to be not less than the lower limit, a sufficient reinforcing effect tends to be obtained. If the N₂SA is set to be not greater than the upper limit, excellent low fuel consumption performance tends to be obtained.

The rubber composition may contain silica. If silica is blended therein, favorable wet grip performance, wear resistance, and the like are obtained.

The silica is not particularly limited, examples thereof include dry-process silica (silicic anhydride) and wet-process silica (hydrous silicic acid), and wet-process silica is preferable because of a higher silanol group content thereof.

The nitrogen adsorption specific surface area (N₂SA) of the silica in the rubber composition is preferably not less than 40 m²/g and more preferably not less than 50 m²/g. If the N₂SA is set to be not less than the lower limit, favorable breaking strength tends to be obtained. Meanwhile, the N₂SA of the silica is preferably not greater than 300 m²/g and more preferably not greater than 250 m²/g. If the N₂SA is set to be not greater than the upper limit, favorable low heat generation properties and processability of the rubber tend to be obtained.

In the present specification, the nitrogen adsorption specific surface area of the silica is a value measured by the BET method in accordance with ASTM D3037-93.

In the case where the rubber composition contains silica, the amount of the silica per 100 parts by mass of the rubber component is preferably not less than 10 parts by mass and more preferably not less than 20 parts by mass. Meanwhile, the amount is preferably not greater than 150 parts by mass and more preferably not greater than 100 parts by mass. If the amount is within the above range, favorable low fuel consumption performance and the like tend to be obtained.

In the case where the rubber composition is used for the tread of a tire for a passenger car, the amount of the silica per 100 parts by mass of the rubber component is preferably not less than 10 parts by mass, more preferably not less than 30 parts by mass, and further preferably not less than 50 parts by mass. Meanwhile, the amount is preferably not greater than 150 parts by mass, more preferably not greater than 120 parts by mass, and further preferably not greater than 100 parts by mass. If the amount is within the above range, favorable low fuel consumption performance and the like tend to be obtained.

In the case where the rubber composition is used for the tread of a tire for a passenger car, the nitrogen adsorption specific surface area (N₂SA) of the silica is preferably not less than 100 m²/g and more preferably not less than 150 m²/g. If the N₂SA is set to be not less than the lower limit, favorable breaking strength tends to be obtained. Meanwhile, the N₂SA of the silica is preferably not greater than 300 m²/g and more preferably not greater than 250 m²/g. If the N₂SA is set to be not greater than the upper limit, favorable low heat generation properties and processability of the rubber tend to be obtained.

In the case where the rubber composition contains silica, the rubber composition preferably further contains a silane coupling agent. The silane coupling agent is not particularly limited, and examples thereof include: sulfide silane coupling agents such as bis(3-triethoxysilylpropyl)tetrasulfide, bis(2-triethoxysilylethyl)tetrasulfide, bis(4-triethoxysilylbutyl)tetrasulfide, bis(3-trimethoxysilylpropyl)tetrasulfide, bis(2-trimethoxysilylethyl)tetrasulfide, bis(2-triethoxysilylethyl)trisulfide, bis(4-trimethoxysilylbutyl)trisulfide, bis(3-triethoxysilylpropyl)disulfide, bis(2-triethoxysilylethyl)disulfide, bis(4-triethoxysilylbutyl)disulfide, bis(3-trimethoxysilylpropyl)disulfide, bis(2-trimethoxysilylethyl)disulfide, bis(4-trimethoxysilylbutyl)disulfide, 3-trimethoxysilylpropyl-N,N-dimethylthiocarbamoyl tetrasulfide, 2-triethoxysilylethyl-N,N-dimethylthiocarbamoyl tetrasulfide, and 3-triethoxysilylpropyl methacrylate monosulfide; mercapto silane coupling agents such as 3-mercaptopropyltrimethoxysilane, 2-mercaptoethyltriethoxysilane, and NXT and NXT-Z manufactured by Momentive; vinyl silane coupling agents such as vinyltriethoxysilane and vinyltrimethoxysilane; amino silane coupling agents such as 3-aminopropyltriethoxysilane and 3-aminopropyltrimethoxysilane; glycidoxy silane coupling agents such as γ-glycidoxypropyltriethoxysilane and γ-glycidoxypropyltrimethoxysilane; nitro silane coupling agents such as 3-nitropropyltrimethoxysilane and 3-nitropropyltriethoxysilane; and chloro silane coupling agents such as 3-chloropropyltrimethoxysilane and 3-chloropropyltriethoxysilane. As commercially available products, products of Degussa, Momentive, Shin-Etsu Chemical Co., Ltd., Tokyo Chemical Industry Co., Ltd., AZmax, Dow Corning Toray Co., Ltd., etc., can be used. These silane coupling agents may be used singly, or two or more of these silane coupling agents may be used in combination.

The amount of the silane coupling agent per 100 parts by mass of the silica is preferably not less than 3 parts by mass and more preferably not less than 6 parts by mass. If the amount is not less than 3 parts by mass, favorable breaking strength and the like tend to be obtained. Meanwhile, the above amount is preferably not greater than 20 parts by mass and more preferably not greater than 15 parts by mass. If the above amount is not greater than 20 parts by mass, an effect corresponding to the blending amount tends to be obtained.

Another filler in addition to the silica and the carbon black may be blended in the above rubber composition. The other filler is not particularly limited, and examples thereof include calcium carbonate, talc, alumina, clay, aluminum hydroxide, aluminum oxide, and mica.

The above rubber composition may contain oil. One kind of oil may be used, or two or more kinds of oils may be used in combination.

The oil is not particularly limited, and conventionally known oils can be used. Examples of conventionally known oils include process oils such as paraffinic process oils, aromatic process oils, and naphthenic process oils, low-PCA (polycyclic aromatics) process oils such as TDAE and MES, vegetable fats and oils, and mixtures of these. Among them, aromatic process oils are preferable in terms of wear resistance and fracture properties. Specific examples of the aromatic process oils include Diana Process Oil AH series manufactured by Idemitsu Kosan Co., Ltd.

In the case where oil is contained, the amount thereof per 100 parts by mass of the rubber component is preferably not less than 3 parts by mass and more preferably not less than 6 parts by mass. Meanwhile, the above amount is preferably not greater than 20 parts by mass and more preferably not greater than 15 parts by mass.

A solid resin (a polymer in solid form at normal temperature (25°C)) may be blended in the rubber composition.

In the case where a solid resin is contained, the amount thereof per 100 parts by mass of the rubber component is preferably not less than 1 part by mass, more preferably not less than 3 parts by mass, and further preferably not less than 5 parts by mass. Meanwhile, the above amount is preferably not greater than 50 parts by mass, more preferably not greater than 30 parts by mass, and further preferably not greater than 20 parts by mass.

The solid resin is not particularly limited, and examples thereof include solid-form styrene-based resins, solid-form coumarone-indene resins, solid-form terpene-based resins, solid-form p-t-butylphenol acetylene resins, solid-form acrylic resins, solid-form dicyclopentadiene resins (DCPD resins), solid-form C5 petroleum resins, solid-form C9 petroleum resins, and solid-form C5C9 petroleum resins. These solid resins may be used singly, or two or more of these solid resins may be used in combination.

Solid-form styrene-based resins are solid-form polymers using styrene-based monomers as constituent monomers, and examples of such solid-form polymers include polymers obtained by polymerizing styrene-based monomers as main components (not less than 50% by mass). Specific examples of such polymers include: homopolymers obtained by solely polymerizing a styrene-based monomer (styrene, o-methylstyrene, m-methylstyrene, p-methylstyrene, α-methylstyrene, p-methoxystyrene, p-tert-butylstyrene, p-phenylstyrene, o-chlorostyrene, m-chlorostyrene, p-chlorostyrene, or the like); copolymers obtained by copolymerizing two or more styrene-based monomers; and moreover, copolymers of a styrene-based monomer and another monomer that can be copolymerized therewith.

Examples of the other monomer described above include: acrylonitriles such as acrylonitrile and methacrylonitrile; acryls; unsaturated carboxylic acids such as methacrylic acid; unsaturated carboxylic acid esters such as methyl acrylate and methyl methacrylate; dienes such as chloroprene and butadiene isoprene; olefins such as 1-butene and 1-pentene; α, β-unsaturated carboxylic acids or acid anhydrides thereof such as maleic anhydride; and the like.

Among them, solid-form α-methylstyrene-based resins (α-methylstyrene homopolymers, copolymers of α-methylstyrene and styrene, and the like) are preferable.

Examples of the solid-form coumarone-indene resins include solid resins having the same constituent units as those of liquid-form coumarone-indene resins.

Examples of the solid-form terpene-based resins include polyterpenes, terpene phenols, and aromatic denatured terpene resins.

Polyterpenes are resins obtained by polymerizing terpene compounds, and hydrogenated products of the resins. The terpene compounds are hydrocarbons represented by a composition (C₅H₈)ₙ and oxygenated derivatives thereof, and are compounds having, as a basic backbone, a terpene classified into monoterpene (C₁₀H₁₆), sesquiterpene (C₁₅H₂₄), diterpene (C₂₀H₃₂), and the like, and examples of the terpene compounds include α-pinene, β-pinene, dipentene, limonene, myrcene, allo-ocimene, ocimene, α-phellandrene, α-terpinene, γ-terpinene, terpinolene, 1,8-cineole, 1,4-cineole, α-terpineol, β-terpineol, and γ-terpineol.

Examples of solid-form polyterpenes include: terpene resins formed from the above-described terpene compounds, such as α-pinene resins, β-pinene resins, limonene resins, dipentene resins, and β-pinene-limonene resins; and moreover, solid resins such as hydrogenated terpene resins obtained by hydrogenating the terpene resins.

Examples of solid-form terpene phenols include solid resins obtained by copolymerizing the above terpene compounds and phenolic compounds, and solid resins obtained by hydrogenating the resins, and specific examples of the solid-form terpene phenols include solid resins obtained by condensation of the above terpene compounds, phenolic compounds, and formalin. Examples of the phenolic compounds include phenol, bisphenol A, cresol, and xylenol.

Examples of solid-form aromatic denatured terpene resins include solid resins obtained by denaturing terpene resins with aromatic compounds, and solid resins obtained by hydrogenating the resins. The aromatic compounds are not particularly limited as long as being compounds having aromatic rings, and examples of the aromatic compounds include: phenolic compounds such as phenol, alkylphenols, alkoxyphenols, and unsaturated hydrocarbon group-containing phenols; naphthol compounds such as naphthol, alkylnaphthols, alkoxynaphthols, and unsaturated hydrocarbon group-containing naphthols; styrene and styrene derivatives such as alkylstyrenes, alkoxystyrenes, and unsaturated hydrocarbon group-containing styrenes; coumarone; and indene.

Examples of the solid-form p-t-butylphenol acetylene resins include solid resins obtained by a condensation reaction of p-t-butylphenol and acetylene.

Although the solid-form acrylic resins are not particularly limited, a non-solvent type acrylic solid resin can be suitably used since a resin containing less impurities and having a sharp molecular weight distribution is obtained.

Examples of the solid-form non-solvent type acrylic resin include (meth)acrylic resins (polymers) synthesized by a high-temperature continuous polymerization method (high-temperature continuous bulk polymerization method) (the methods disclosed in US Patent No. 4,414,370, Japanese Laid-Open Patent Publication No. 59-6207, Japanese Examined Patent Publication No. 5-58005, Japanese Laid-Open Patent Publication No. 1-313522, US Patent No. 5,010,166, annual search report of Toagosei Co., Ltd., TREND 2000, No. 3, pages 42-45, etc.) by avoiding use of a polymerization initiator, a chain transfer agent, an organic solvent, etc., which are sub-materials, as much as possible. In the present specification, "(meth)acrylic" means "methacrylic" and "acrylic".

The solid-form acrylic resin preferably contains substantially no polymerization initiator, chain transfer agent, organic solvent, etc., which are sub-materials. In addition, the above acrylic resin is preferably a resin obtained by continuous polymerization and having a relatively narrow composition distribution and a relatively narrow molecular weight distribution.

As described above, the solid-form acrylic resin preferably contains substantially no polymerization initiator, chain transfer agent, organic solvent, etc., which are sub-materials, that is, the solid-form acrylic resin preferably has high purity. The purity of the solid-form acrylic resin (the proportion of resin contained in the resin) is preferably not less than 95% by mass and more preferably not less than 97% by mass.

Examples of a monomer component that forms the solid-form acrylic resin include (meth)acrylic acid, and (meth)acrylic acid derivatives such as (meth)acrylic acid esters (alkyl esters, aryl esters, aralkyl esters, and the like), (meth)acrylic amide, and (meth)acrylic amide derivatives.

In addition, as the monomer component that forms the solid-form acrylic resin, an aromatic vinyl such as styrene, α-methylstyrene, vinyltoluene, vinylnaphthalene, divinylbenzene, trivinylbenzene, or divinylnaphthalene may be used together with (meth)acrylic acid or a (meth)acrylic acid derivative.

The solid-form acrylic resin may be a resin formed only from a (meth)acrylic component, or may be a resin that further contains, as a constituent element, a component other than the (meth)acrylic component.

In addition, the solid-form acrylic resin may have a hydroxyl group, a carboxyl group, a silanol group, etc.

As the solid resin, for example, products of Maruzen Petrochemical Co., Ltd., Sumitomo Bakelite Co., Ltd., Yasuhara Chemical Co., Ltd., Tosoh Corporation, Rutgers Chemicals AG, BASF, Arizona Chemical Company, NITTO CHEMICAL CO., LTD., NIPPON SHOKUBAI CO., LTD., JXTG Nippon Oil & Energy Corporation, Arakawa Chemical Industries, Ltd., Taoka Chemical Co., Ltd., etc., can be used.

The above rubber composition preferably contains an antioxidant from the viewpoints of crack resistance, ozone resistance, and the like.

The antioxidant is not particularly limited, and examples thereof include: naphthylamine antioxidants such as phenyl-α-naphthylamine; diphenylamine antioxidants such as octylated diphenylamine and 4,4'-bis(α,α'-dimethylbenzyl)diphenylamine; p-phenylenediamine antioxidants such as N-isopropyl-N'-phenyl-p-phenylenediamine, N-(1,3-dimethylbutyl)-N'-phenyl-p-phenylenediamine, and N,N'-di-2-naphthyl-p-phenylenediamine; quinoline antioxidants such as a polymer of 2,2,4-trimethyl-1,2-dihydroquinoline; monophenol antioxidants such as 2,6-di-t-butyl-4-methylphenol and styrenated phenol; and bis-, tris-, and poly-phenol antioxidants such as tetrakis-[methylene-3-(3',5'-di-t-butyl-4'-hydroxyphenyl)propionate]methane. Among them, p-phenylenediamine antioxidants and quinoline antioxidants are preferable, and N-(1,3-dimethylbutyl)-N'-phenyl-p-phenylenediamine and a polymer of 2,2,4-trimethyl-1,2-dihydroquinoline are more preferable. As commercially available products, for example, products of Seiko Chemical Co., Ltd., Sumitomo Chemical Co., Ltd., OUCHI SHINKO CHEMICAL INDUSTRIAL CO., LTD., Flexsys, etc., can be used.

The amount of the antioxidant per 100 parts by mass of the rubber component is preferably not less than 0.2 parts by mass and more preferably not less than 0.5 parts by mass. If the amount is set to be not less than the lower limit, sufficient ozone resistance tends to be obtained. Meanwhile, the amount is preferably not greater than 7.0 parts by mass and more preferably not greater than 4.0 parts by mass. If the amount is set to be not greater than the upper limit, favorable appearance tends to be obtained.

The above rubber composition preferably contains stearic acid. The amount of the stearic acid per 100 parts by mass of the rubber component is preferably 0.5 to 10 parts by mass and more preferably 0.5 to 5 parts by mass.

As the stearic acid, a conventionally known stearic acid can be used. For example, products of NOF Corporation, Kao Corporation, FUJIFILM Wako Pure Chemical Corporation, New Japan Chemical Co., Ltd., etc., can be used.

The above rubber composition preferably contains zinc oxide. The amount of the zinc oxide per 100 parts by mass of the rubber component is preferably 0.5 to 10 parts by mass and more preferably 1 to 5 parts by mass.

As the zinc oxide, a conventionally known zinc oxide can be used. For example, products of Mitsui Mining & Smelting Co., Ltd., Toho Zinc Co., Ltd., HakusuiTech Co., Ltd., SEIDO CHEMICAL INDUSTRY CO., LTD., Sakai Chemical Industry Co., Ltd., etc., can be used.

Wax may be blended in the above rubber composition. The amount of the wax per 100 parts by mass of the rubber component is preferably 0.5 to 10 parts by mass and more preferably 0.5 to 5 parts by mass, from the viewpoint of performance balance.

The wax is not particularly limited, and examples thereof include petroleum waxes and natural waxes. In addition, a synthetic wax obtained by refining or chemically treating a plurality of waxes can also be used. These waxes may be used singly, or two or more of these waxes may be used in combination.

Examples of the petroleum waxes include paraffin wax and microcrystalline wax. The natural waxes are not particularly limited as long as being waxes derived from non-petroleum resources, and examples of the natural waxes include: vegetable waxes such as candelilla wax, carnauba wax, Japan wax, rice wax, and jojoba wax; animal waxes such as beeswax, lanolin, and whale wax; mineral waxes such as ozokerite, ceresin, and petrolatum; and refined products of these. As commercially available products, for example, products of OUCHI SHINKO CHEMICAL INDUSTRIAL CO., LTD., NIPPON SEIRO CO., LTD., Seiko Chemical Co., Ltd., etc., can be used. The amount of the wax may be set as appropriate in consideration of ozone resistance and cost.

Sulfur is preferably blended in the above rubber composition since crosslinked chains are moderately formed in the polymer chain and favorable performance is imparted.

The amount of the sulfur per 100 parts by mass of the rubber component is preferably not less than 0.1 parts by mass, more preferably not less than 0.5 parts by mass, and further preferably not less than 0.7 parts by mass. Meanwhile, the amount is preferably not greater than 6.0 parts by mass, more preferably not greater than 4.0 parts by mass, and further preferably not greater than 3.0 parts by mass.

Examples of the sulfur include powdery sulfur, precipitated sulfur, colloidal sulfur, insoluble sulfur, highly dispersible sulfur, and soluble sulfur which are generally used in the rubber industry. As commercially available products, products of Tsurumi Chemical Industry Co., Ltd., Karuizawa Sulfur Co, Ltd., SHIKOKU CHEMICALS CORPORATION, Flexsys, Nippon Kanryu Industry Co., Ltd., Hosoi Chemical Industry Co., Ltd., etc., can be used. These sulfurs may be used singly, or two or more of these sulfurs may be used in combination.

The above rubber composition preferably contains a vulcanization accelerator.

Although the amount of the vulcanization accelerator is not particularly limited and may be freely determined in accordance with a desired vulcanization rate or crosslink density, the amount of the vulcanization accelerator per 100 parts by mass of the rubber component is normally 0.3 to 10 parts by mass and preferably 0.5 to 7 parts by mass.

The type of the vulcanization accelerator is not particularly limited, and generally used vulcanization accelerators can be used. Examples of the vulcanization accelerator include: thiazole-based vulcanization accelerators such as 2-mercaptobenzothiazole, di-2-benzothiazolyl disulfide, and N-cyclohexyl-2-benzothiazyl sulfenamide; thiuram-based vulcanization accelerators such as tetramethylthiuram disulfide (TMTD), tetrabenzylthiuram disulfide (TBzTD), and tetrakis(2-ethylhexyl)thiuram disulfide (TOT-N); sulfenamide-based vulcanization accelerators such as N-cyclohexyl-2-benzothiazole sulfenamide, N-t-butyl-2-benzothiazolyl sulfenamide, N-oxyethylene-2-benzothiazole sulfenamide, and N,N'-diisopropyl-2-benzothiazole sulfenamide; and guanidine-based vulcanization accelerators such as diphenylguanidine, diorthotolylguanidine, and orthotolylbiguanidine. These vulcanization accelerators may be used singly, or two or more of these vulcanization accelerators may be used in combination. Among them, sulfenamide-based vulcanization accelerators and guanidine-based vulcanization accelerators are preferable from the viewpoint of the performance balance.

In accordance with application fields of mold release agents, pigments, and the like, an additive ordinarily used as any of them may be blended, in addition to the above components, in the above rubber composition, as appropriate.

As a method for producing the above rubber composition, known methods can be used. For example, the rubber composition can be produced by a method in which the above components are kneaded with use of a rubber kneading device such as an open roll or a Banbury mixer, and then vulcanization is performed. Specifically, for example, the rubber composition can be produced by a production method that includes a step of kneading a rubber component, microfibrillated plant fibers, and a modifier capable of being covalently bonded to the microfibrillated plant fibers so as to produce a kneaded product in which covalent bonds are formed between the modifier and the microfibrillated plant fibers, and a step of performing vulcanization.

Among the known methods, a method in which a mixture (masterbatch) of a rubber component and microfibrillated plant fibers is prepared in advance before mixing of the microfibrillated plant fibers and a modifier capable of being covalently bonded thereto, is preferable from the viewpoints of the performance characteristics such as the dispersibility of the microfibrillated plant fibers, the tensile properties, and the low fuel consumption performance. Specifically, a microfibrillated plant fiber-rubber complex (masterbatch) is preferably prepared first by performing a preparation method that includes a step (step (1)) of preparing a mixture solution by mixing an anionic surfactant and a microfibrillated plant fiber dispersion solution, and a step (step (2)) of mixing the mixture solution and a rubber component. Then, a rubber composition (vulcanized) is preferably produced by performing a step (step (3)) of kneading the components such as the obtained masterbatch and the modifier so as to produce a kneaded product in which covalent bonds are formed between the modifier and the microfibrillated plant fibers, and a step (step (4)) of vulcanizing an unvulcanized rubber composition. As long as the production method includes the above steps, the production method may include other steps, and furthermore, each of the above steps may be performed once or may be repeatedly performed a plurality of times.

### (Step (1))

First, a step (step (1)) of preparing a mixture solution by mixing an anionic surfactant and a microfibrillated plant fiber dispersion solution, is performed.

The above anionic surfactant has a hydrophobic group and a hydrophilic group. It is inferred that, by using such a surfactant, the hydrophobic group and a hydrophobic group of rubber form hydrophobic-hydrophobic bonds to exhibit affinity and the hydrophilic group and a hydroxyl group of the microfibrillated plant fibers are attracted to each other by hydrogen bonds therebetween to exhibit affinity, thereby improving the dispersibility of the microfibrillated plant fibers, whereby aggregation of the microfibrillated plant fibers in rubber is suppressed, and thus generation of aggregates can be suppressed. One kind of anionic surfactant may be used, or two or more kinds of anionic surfactants may be used in combination.

The above hydrophobic group only has to be a hydrophobic functional group, and is preferably a hydrocarbon group among hydrophobic functional groups. The hydrocarbon group may be either of linear, branched, and cyclic hydrocarbon groups, and examples thereof include aliphatic hydrocarbon groups, alicyclic hydrocarbon groups, and aromatic hydrocarbon groups. Among them, aliphatic hydrocarbon groups and aromatic hydrocarbon groups are preferable. The number of carbon atoms of the above hydrocarbon group is preferably 4 to 20, more preferably 4 to 15, and further preferably 4 to 12.

Among the above aliphatic hydrocarbon groups, aliphatic hydrocarbon groups having 1 to 20 carbon atoms are preferable, aliphatic hydrocarbon groups having 1 to 10 carbon atoms are more preferable, and aliphatic hydrocarbon groups having 1 to 6 carbon atoms are further preferable. Preferable examples of such aliphatic hydrocarbon groups include an alkyl group having any of the above numbers of carbon atoms, and specific examples of such an alkyl group include a methyl group, an ethyl group, an n-propyl group, an isopropyl group, an n-butyl group, an isobutyl group, a sec-butyl group, a tert-butyl group, a pentyl group, a hexyl group, a heptyl group, a 2-ethylhexyl group, an octyl group, a nonyl group, a decyl group, an undecyl group, a dodecyl group, a tridecyl group, a tetradecyl group, a pentadecyl group, and an octadecyl group. In addition, the preferable examples further include an alkenyl group and an alkynyl group having any of the above numbers of carbon atoms, and examples thereof include alkenyl groups such as a vinyl group, an allyl group, a 1-propenyl group, a 1-methylethenyl group, and an isobutylene group, and alkynyl groups such as an ethynyl group and a propargyl group. Among them, an isobutylene group is preferable.

Among the above alicyclic hydrocarbon groups, alicyclic hydrocarbon groups having 3 to 8 carbon atoms are preferable, and specific examples of such alicyclic hydrocarbon groups include a cyclopropyl group, a cyclobutyl group, a cyclopentyl group, a cyclohexyl group, a cycloheptyl group, a cyclooctyl group, a cyclopropenyl group, a cyclobutenyl group, a cyclopentenyl group, a cyclohexenyl group, a cycloheptenyl group, and a cyclooctenyl group.

Among the above aromatic hydrocarbon groups, aromatic hydrocarbon groups having 6 to 12 carbon atoms are preferable, and specific examples of such aromatic hydrocarbon groups include a phenyl group, a benzyl group, a phenethyl group, a tolyl group, a xylyl group, and a naphthyl group. Among them, a phenyl group, a benzyl group, and a phenethyl group are preferable, a phenyl group and a benzyl group are more preferable, and a phenyl group is particularly preferable. The positions of substitution of the methyl groups on the benzene rings in a tolyl group and a xylyl group may be either of the ortho-position, the meta-position, and the para-position.

The above hydrophilic group is preferably at least one selected from the group consisting of a carboxyl group, a sulfonate group, a sulfate group, and a phosphate group. Among them, a carboxyl group is particularly preferable.

As the above anionic surfactant, an anionic surfactant having a phenyl group or an isobutylene group as the hydrophobic group and having a carboxyl group as the hydrophilic group, is particularly preferable.

Preferable examples of the above anionic surfactant include anionic surfactants having the above functional groups, and such anionic surfactants can be specifically classified into carboxylic acid-based surfactants, sulfonic acid-based surfactants, sulfuric acid ester-based surfactants, phosphoric acid ester-based surfactants, and the like.

Examples of the carboxylic acid-based surfactants include fatty acid salts having 6 to 30 carbon atoms, polycarboxylic acid salts, rosin acid salts, dimer acid salts, polymer acid salts, tall oil fatty acid salts, and polycarboxylic acid-type polymeric surfactants. The carboxylic acid-based surfactants are preferably carboxylic acid salts each having 10 to 20 carbon atoms, polycarboxylic acid salts, or polycarboxylic acid-type polymeric surfactants and are particularly preferably polycarboxylic acid-type polymeric surfactants.

Examples of the above sulfonic acid-based surfactants include alkyl benzene sulfonic acid salts, alkyl sulfonic acid salts, alkyl naphthalene sulfonic acid salts, naphthalene sulfonic acid salts, and diphenyl ether sulfonic acid salts.

Examples of the above sulfuric acid ester-based surfactants include alkyl sulfuric acid ester salts, polyoxyalkylene alkyl sulfuric acid ester salts, polyoxyalkylene alkyl phenyl ether sulfuric acid salts, tristyrenated phenol sulfuric acid ester salts, distyrenated phenol sulfuric acid ester salts, α-olefin sulfuric acid ester salts, alkyl succinic acid-sulfuric acid ester salts, polyoxyalkylene tristyrenated phenol sulfuric acid ester salts, and polyoxyalkylene distyrenated phenol sulfuric acid ester salts.

Examples of the above phosphoric acid ester-based surfactants include alkyl phosphoric acid ester salts and polyoxyalkylene phosphoric acid ester salts.

Examples of these compound salts include metal salts (Na, K, Ca, Mg, Zn, and the like), ammonium salts, and amine salts (triethanol amine salts and the like).

Examples of alkyl groups in the above surfactants include an alkyl group having 4 to 30 carbon atoms. In addition, examples of polyoxyalkylene groups in the above surfactants include a polyoxyalkylene group having an alkylene group having 2 to 4 carbon atoms, and, for example, a polyoxyalkylene group in which the number of moles of ethylene oxide added is about 1 to 50 moles can be used.

The weight-average molecular weight (Mw) of the above anionic surfactant is preferably not less than 500 and more preferably not less than 1000. Meanwhile, the Mw is preferably not greater than 50000 and more preferably not greater than 30000.

As the above anionic surfactant, for example, products of ELEMENTIS PLC., Kao Corporation, DKS Co., Ltd., Sanyo Chemical Industries, Ltd., etc., can be used.

The above microfibrillated plant fiber dispersion solution is a dispersion solution (slurry) that is obtained by dispersing microfibrillated plant fibers in a solvent. The solvent is not particularly limited, and examples thereof include water.

The above microfibrillated plant fiber dispersion solution can be produced by a known method, and the production method is not particularly limited. For example, the microfibrillated plant fiber dispersion solution can be prepared by dispersing microfibrillated plant fibers in a solvent such as water by using a high-speed homogenizer, an ultrasonic homogenizer, a colloid mill, a blender mill, or the like. The temperature and the time for the preparation can be set, as appropriate, within a range for normal preparation such that the microfibrillated plant fibers are sufficiently dispersed in the solvent such as water.

Although the amount (solid content) of the microfibrillated plant fibers in the above microfibrillated plant fiber dispersion solution is not particularly limited, the amount (solid content) is preferably 0.2 to 20% by mass, more preferably 0.5 to 10% by mass, and further preferably 0.5 to 3% by mass.

Examples of the method for preparing a mixture solution by mixing the anionic surfactant and the microfibrillated plant fiber dispersion solution in the above step (1), include a method in which the anionic surfactant and the microfibrillated plant fiber dispersion solution are mixed using a known agitation device such as a high-speed homogenizer, an ultrasonic homogenizer, a colloid mill, a blender mill, or the like. By sufficiently agitating the anionic surfactant and the microfibrillated plant fiber dispersion solution until they are sufficiently dispersed, a mixture solution of the anionic surfactant and the microfibrillated plant fiber dispersion solution can be obtained. Although the temperature and the time for preparation of the mixture solution can be set, as appropriate, within a range for normal preparation such that the anionic surfactant and the microfibrillated plant fiber dispersion solution are sufficiently dispersed, the temperature and the time are, for example, preferably 10 to 40°C and 3 to 120 minutes, and more preferably 15 to 30°C and 5 to 90 minutes.

In the above step (1), the added amount of the above anionic surfactant per 100 parts by mass of the microfibrillated plant fibers (solid component) contained in the microfibrillated plant fiber dispersion solution, is preferably 8 to 50 parts by mass. The added amount is more preferably not less than 9 parts by mass and further preferably not less than 10 parts by mass. Meanwhile, the added amount is more preferably not greater than 25 parts by mass and further preferably not greater than 20 parts by mass.

### (Step (2))

Next, a step (step (2)) of mixing the mixture solution obtained in step (1) and a rubber component is performed. As the supply source of the rubber component, the aforementioned rubber latex can be suitably used from the viewpoint of the dispersibility of the microfibrillated plant fibers, and the like.

Examples of the method for mixing the mixture solution obtained in step (1) and a rubber component (rubber latex or the like) in the above step (2), include a method in which the rubber is put into a known agitation device such as a high-speed homogenizer, an ultrasonic homogenizer, a colloid mill, a blender mill, or the like, and, while the rubber is being agitated, the mixture solution obtained in step (1) is dropped thereonto, and a method in which, while the mixture solution obtained in step (1) is being agitated, the rubber component is dropped thereonto. By sufficiently agitating the mixture solution and the rubber component until they are sufficiently dispersed, a mixture (blended latex or the like) of the mixture solution obtained in step (1) and the rubber component can be obtained. Although the temperature and the time for preparation of the mixture can be set, as appropriate, within a range for normal preparation such that the mixture solution obtained in step (1) and the rubber component are sufficiently dispersed, the temperature and the time are, for example, preferably 10 to 40°C and 3 to 120 minutes, and more preferably 15 to 30°C and 5 to 90 minutes.

The pH of the mixture (blended latex or the like) obtained in the above step (2) is preferably not less than 9.0 and more preferably not less than 9.5. Meanwhile, the pH is preferably not greater than 12 and more preferably not greater than 11.5. If the pH of the mixture (blended latex or the like) formed of the mixture solution obtained in the above step (1) and the rubber component is within such a range, deterioration of the mixture can be suppressed and the mixture can be stabilized.

In the above step (2), the mixture solution obtained in step (1) is preferably mixed such that the amount of the microfibrillated plant fibers (solid component) per 100 parts by mass of the solid component in the rubber becomes 2 to 45 parts by mass. If the amount is within the above range, the aforementioned advantageous effects tend to be suitably obtained. The amount of the microfibrillated plant fibers (solid component) is more preferably not less than 5 parts by mass and further preferably not less than 10 parts by mass. Meanwhile, the amount is more preferably not greater than 40 parts by mass and further preferably not greater than 35 parts by mass.

When the mixture (blended latex or the like) obtained in the above step (2) is solidified as necessary and the solidified product (an aggregate that contains aggregated rubber and microfibrillated plant fibers) is filtered and dried by a known method, and furthermore, after the drying, rubber kneading is performed with a two-roll mill, a Banbury mixer, or the like, a complex (microfibrillated plant fiber-rubber complex) in which the microfibrillated plant fibers are sufficiently dispersed in rubber matrixes can be obtained. The microfibrillated plant fiber-rubber complex may contain another component.

The above solidification is performed ordinarily by adding an acid to the mixture (blended latex or the like) obtained in the above step (2). Examples of the acid for the solidification include sulfuric acid, hydrochloric acid, formic acid, and acetic acid. The temperature for the solidification is preferably 10 to 40°C.

At the time of the above solidification, the pH of the mixture (blended latex or the like) obtained in the above step (2) is preferably adjusted to 3 to 5 and more preferably adjusted to 3 to 4.

In addition, an aggregating agent may be added for the purpose of controlling the extent of the solidification (the sizes of solidified aggregate particles). A cationic macromolecule or the like can be used as the aggregating agent.

The microfibrillated plant fiber-rubber complex obtained through steps (1) and (2) can be used as a masterbatch. In the above microfibrillated plant fiber-rubber complex, the microfibrillated plant fibers are sufficiently dispersed in the rubber, and the microfibrillated plant fibers can be sufficiently dispersed also in a rubber composition obtained by mixing the complex with another component. Accordingly, the microfibrillated plant fibers have excellent dispersibility, and favorable tensile properties (tensile strength and elongation at break) and low fuel consumption performance are obtained.

### (Step (3))

Components such as the microfibrillated plant fiber-rubber complex (masterbatch) obtained in step (2), the modifier, another rubber component, other than the rubber in the complex, that is to be blended as necessary, carbon black, and silica, are kneaded by a known method. By the kneading, a kneaded product in which covalent bonds are formed between the modifier and the microfibrillated plant fibers in the microfibrillated plant fiber-rubber complex, is produced.

As for the kneading conditions, in a step (base kneading step) of kneading the additives other than a vulcanizing agent and a vulcanization accelerator, the kneading temperature is normally 50 to 200°C and preferably 80 to 190°C, and the kneading time is normally 30 seconds to 30 minutes and preferably 1 minute to 30 minutes.

### (Step (4))

The kneaded product obtained in step (3), the vulcanizing agent, and the vulcanization accelerator are kneaded to produce an unvulcanized rubber composition. Then, step (4) of vulcanization is performed to produce a rubber composition (vulcanized). In a step (finish kneading step) of kneading the vulcanizing agent and the vulcanization accelerator, the kneading temperature is normally not greater than 100°C and preferably room temperature to 80°C. In addition, when vulcanization processing such as press vulcanization is performed on the composition obtained by kneading the vulcanizing agent and the vulcanization accelerator (step (4), i.e., a vulcanization step), the vulcanization temperature is normally 120 to 200°C and preferably 140 to 180°C.

The rubber composition can be suitably used as members, of pneumatic tires, such as sidewalls, base treads, bead apexes, clinch apexes, inner liners, under treads, breaker toppings, ply toppings, and treads. The rubber composition can be suitably used for, as the pneumatic tires, tires for passenger cars, heavy-duty tires used for trucks, buses, etc., and the like.

The above rubber composition can be suitably used for tires. The tires are manufactured by a normal method using the above rubber composition. Specifically, the rubber composition in which various materials have been blended as necessary, is extruded into the shape of a tire member in an unvulcanized state, and is formed on a tire forming machine by a general method together with other tire members, thereby forming an unvulcanized tire. Thereafter, the unvulcanized tire is heated and pressurized in a vulcanizing machine, thereby being able to produce a tire (a pneumatic tire, a studless tire, a run flat tire, or the like).

### EXAMPLES

The present invention will be specifically described by means of Examples, but the present invention is not limited to these Examples.

### (Preparation of SBR Latex)

In accordance with a composition for feeding in Table 1, water, an emulsifier (1), an emulsifier (2), an electrolyte, styrene, butadiene, and a molecular weight modifier were fed in an agitator-equipped pressure-resistant reactor. With the temperature in the reactor being 5°C, an aqueous solution in which a radical initiator and SFS had been dissolved, and an aqueous solution in which EDTA and a catalyst had been dissolved, were added in the reactor so that polymerization was initiated. A polymerization terminator was added five hours after the initiation of the polymerization so as to terminate the reaction, thereby obtaining SBR latex.

The chemicals that were used are shown below.

Water: Distilled water
Emulsifier (1): Rosin acid soap manufactured by Harima Chemicals, Inc.
Emulsifier (2): Fatty acid soap manufactured by FUJIFILM Wako Pure Chemical Corporation
Electrolyte: Sodium phosphate manufactured by FUJIFILM Wako Pure Chemical Corporation
Styrene: Styrene manufactured by FUJIFILM Wako Pure Chemical Corporation
Butadiene: 1,3-butadiene manufactured by Takachiho Chemical Industrial Co., Ltd.
Molecular weight modifier: Tert-dodecyl mercaptan manufactured by FUJIFILM Wako Pure Chemical Corporation
Radical initiator: Paramenthane hydroperoxide manufactured by NOF Corporation
SFS: Sodium formaldehyde sulfoxylate manufactured by FUJIFILM Wako Pure Chemical Corporation
EDTA: Sodium ethylenediaminetetraacetate manufactured by FUJIFILM Wako Pure Chemical Corporation
Catalyst: Ferric sulfate manufactured by FUJIFILM Wako Pure Chemical Corporation
Polymerization terminator: N,N'-dimethyldithiocarbamate manufactured by FUJIFILM Wako Pure Chemical Corporation

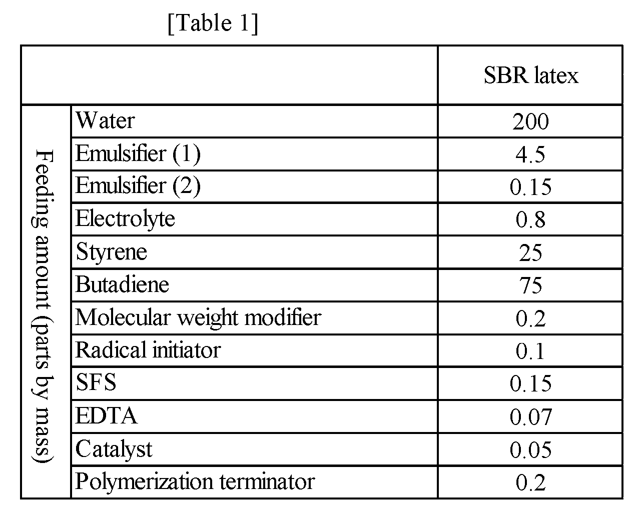

Various chemicals used in the following preparation of a microfibrillated plant fiber dispersion solution and the following preparation of a microfibrillated plant fiber-rubber complex, will be described.
Natural rubber latex: Field latex obtained from Muhibbah LATEKS was used.
SBR latex: Prepared as above.
Microfibrillated plant fibers: Biomass nanofibers (product name "BiNFi-s Cellulose", average fiber length: about 2 µm, average fiber diameter: about 0.02 µm, solid content: 2% by mass) manufactured by SUGINO MACHINE LIMITED
Surfactant: NUOSPERSE FX 600 (an anionic surfactant, a polycarboxylic acid amine salt (containing a phenyl group as a hydrophobic group, and a carboxyl group as a hydrophilic group), Mw: 2000) manufactured by ELEMENTIS PLC.

### (Preparation of Microfibrillated Plant Fiber Dispersion Solution)

150 g of pure water was added to 50g of microfibrillated plant fibers (2% by weight), and a suspension that contains 0.5% by mass (solid component concentration) of the microfibrillated plant fibers was produced. The suspension was agitated and subjected to sonication for ten minutes, thereby obtaining a microfibrillated plant fiber dispersion solution.

### (Preparation of Microfibrillated Plant Fiber-Rubber Complex)

In accordance with each blending formula in Table 2, a predetermined amount of the surfactant was added to the prepared microfibrillated plant fiber dispersion solution, and the microfibrillated plant fiber dispersion solution and the surfactant were agitated for five minutes at room temperature (20 to 30°C) with use of a high-speed homogenizer, thereby obtaining a mixture (mixture solution) of the microfibrillated plant fiber dispersion solution and the surfactant. In accordance with each blending formula in Table 2, the obtained mixture was added to a predetermined amount of the rubber latex, and the mixture and the rubber latex were agitated for five minutes at room temperature with use of a high-speed homogenizer, thereby obtaining a blended latex having a pH of 10.2. Then, a 2%-by-mass formic acid aqueous solution was added to the blended latex at room temperature such that the pH was adjusted to 3 to 4, thereby obtaining a solidified product. The obtained solidified product was filtered and dried, thereby obtaining a microfibrillated plant fiber-rubber complex (MB1, MB2, MB3).

**[table 2]**

| | Rubber | Fibers | Amount of microfibrillated plant fibers per 100 parts by mass of rubber solid component in rubber (parts by mass) | Surfuctant | Added amount of surfactant per 100 parts by mass of microfibrillated plant fibers (parts by mass) | Amount of rubber solid component/amount of microfibrillated plant fibers in MB (masterbatch) |
|---|---|---|---|---|---|---|
| MB1 | Natural rubber latex | Microfibrillated plant fibers | 33.3 | Surfactant (FX 600) | 10 | 60/20 |
| MB2 | Natural rubber latex | Microfibrillated plant fibers | 20 | Surfuctant (FX 600) | 10 | 100/20 |
| MB3 | SBR latex | Microfibrillated plant fibers | 28.6 | Surfuctant (FX 600) | 10 | 70/20 |

Various chemicals used in Examples and Comparative Examples will be collectively described below.
Microfibrillated plant fiber-rubber complexes (MB1 to MB3): Prepared as above.
NR: TSR20
BR: High-cis BR (cis content: 97% by mass, Mw: 400,000)
SBR: SBR 1502 (styrene unit content: 23.5% by mass) manufactured by JSR Corporation
Carbon black: SHOBLACK N220 (N₂SA: 111 m²/g) manufactured by Cabot Japan K.K.
Silica: Ultrasil VN3 (N₂SA: 175 m²/g) manufactured by Degussa
Silane coupling agent: Si69 (bis(3-triethoxysilylpropyl)tetrasulfide) manufactured by Evonik Degussa GmbH Liquid polyisoprene (undenatured): LIR-30 (Mn=28000) manufactured by KURARAY CO., LTD.
Denatured liquid polyisoprene: LIR-403 (maleic anhydride-denatured liquid polyisoprene, Mn=34000) manufactured by KURARAY CO., LTD.
Wax: OZOACE 0355 manufactured by NIPPON SEIRO CO., LTD.
Antioxidant: OZONONE 6C (N-(1,3-dimethylbutyl)-N'-phenyl-p-phenylenediamine) manufactured by Seiko Chemical Co., Ltd.
Stearic acid: Stearic acid "Tsubaki" manufactured by NOF Corporation
Zinc oxide: Zinc Oxide No. 1 manufactured by Mitsui Mining & Smelting Co., Ltd.
Oil: Process X140 manufactured by JXTG Nippon Oil & Energy Corporation
Sulfur: Powdery sulfur manufactured by Tsurumi Chemical Industry Co., Ltd.
Vulcanization accelerator 1: NOCCELER NS (N-tert-butyl-2-benzothiazolyl sulfenamide) manufactured by OUCHI SHINKO CHEMICAL INDUSTRIAL CO., LTD.
Vulcanization accelerator 2: NOCCELER D (diphenylguanidine) manufactured by OUCHI SHINKO CHEMICAL INDUSTRIAL CO., LTD.

### <Examples and Comparative Examples>

In accordance with each formula shown in Tables 3 to 5, the chemicals other than the sulfur and the vulcanization accelerator were kneaded at 130°C for four minutes with use of a 1.7-L Banbury mixer. Next, the sulfur and the vulcanization accelerator were added to the obtained kneaded product, and the mixture was kneaded at 80°C for four minutes with use of a roll, thereby obtaining an unvulcanized rubber composition. The obtained unvulcanized rubber composition was press-vulcanized at 170°C for 12 minutes, thereby obtaining a vulcanized product.

The obtained vulcanized products and unvulcanized rubber compositions were evaluated as follows, and the results are shown in Tables 3 to 5. Reference Comparative Examples in Tables 3, 4, and 5 are Comparative Examples 1-1, 2-1, and 3-1, respectively.

### (Mode among Fiber Diameters of Microfibrillated Plant Fibers)

An image of each of the obtained vulcanized products was taken through observation with a transmission electron microscope, a distribution was acquired by measuring the diameters of 100 fibers among of the microfibrillated plant fibers in the image, and the mode among the fiber diameters was obtained from the distribution.

### (Average Fiber Diameter of Microfibrillated Plant Fibers)

An image of each of the obtained vulcanized products was taken through observation with a transmission electron microscope, a distribution was acquired by measuring the diameters of 100 fibers among the microfibrillated plant fibers in the image, and the average value of the fiber diameters (average fiber diameter) was obtained from the distribution.

### (Processability)

The Mooney viscosity (ML1+4) of each unvulcanized rubber composition was measured under a temperature condition of 130°C in accordance with a Mooney viscosity measurement method that complies with JIS K 6300-1 "Rubber, unvulcanized - Physical property - Part 1: Determination of Mooney viscosity and pre-vulcanization characteristics with Mooney viscometer". The results are indicated as indexes with the Mooney viscosity of each reference Comparative Example being regarded as 100 (processability index). A larger index indicates that the Mooney viscosity is lower and the processability is more excellent.

### (Hardness)

The hardness of each vulcanized product was measured with use of a type A durometer in accordance with JIS K 6253 "Rubber, vulcanized or thermoplastic - Determination of hardness". The measurement was performed at 25°C. The results are indicated as indexes with the result of each reference Comparative Example being regarded as 100 (hardness index). A larger index indicates that the vulcanized product has higher hardness.

### (Tensile Test)

No. 3 dumbbell type rubber test pieces were produced from the vulcanized products, a tensile test was performed on each No. 3 dumbbell type rubber test piece in accordance with JIS K 6251 "Rubber, vulcanized or thermoplastic - Determination of tensile stress-strain properties", and the breaking strength (TB) and the elongation at break (EB) (%) of the No. 3 dumbbell type rubber test piece were measured. The TB and the EB of each composition are indicated as indexes with the TB and the EB of a rubber test piece of each reference Comparative Example being regarded as 100 (breaking strength index and elongation-at-break index). A larger TB index and a larger EB index each indicate that the breaking strength is more excellent.

### (Low Fuel Consumption Performance)

The tan8 of each composition (vulcanized product) was measured with use of a viscoelastic spectrometer VES (manufactured by Iwamoto Seisakusho) under a condition of a temperature of 50°C, an initial strain of 10%, a dynamic strain of 2%, and a frequency of 10 Hz, and the results are indicated as indexes with the tan8 of a rubber test piece of each reference Comparative Example being regarded as 100 (low fuel consumption performance index). A larger index indicates that the low fuel consumption performance is more excellent.

### (Dispersibility (ΔG*))

The shear modulus G* of each of the above unvulcanized rubber compositions was measured with use of RPA2000 manufactured by Alpha Technology Co., Ltd. The measurement temperature was 100°C. The measurement was performed in a range of 4% to 64% of strain, and ΔG* = G*(4%) - G*(64%) was calculated. The results are indicated as indexes with the ΔG* of a rubber test piece of each reference Comparative Example being regarded as 100 (dispersibility index). A larger index indicates that the microfibrillated plant fibers are more favorably dispersed in the rubber composition.

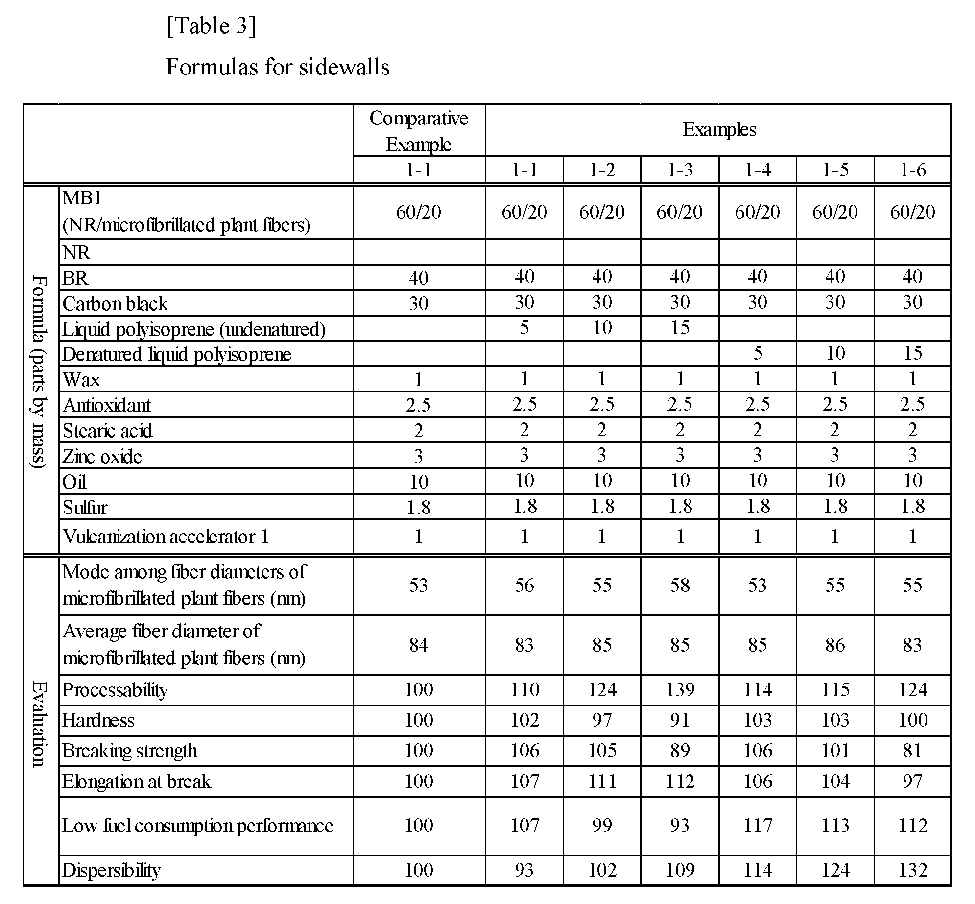

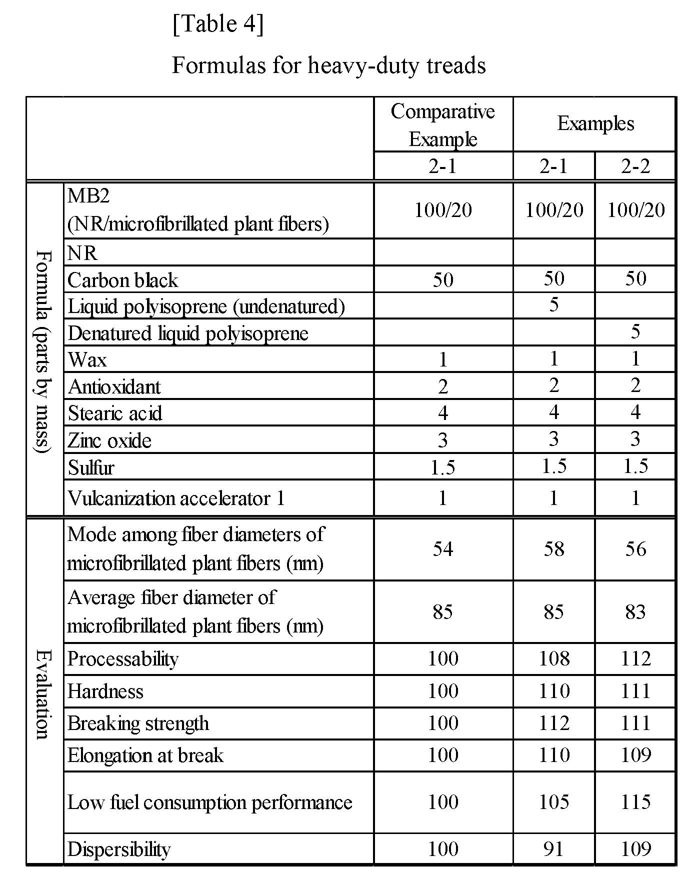

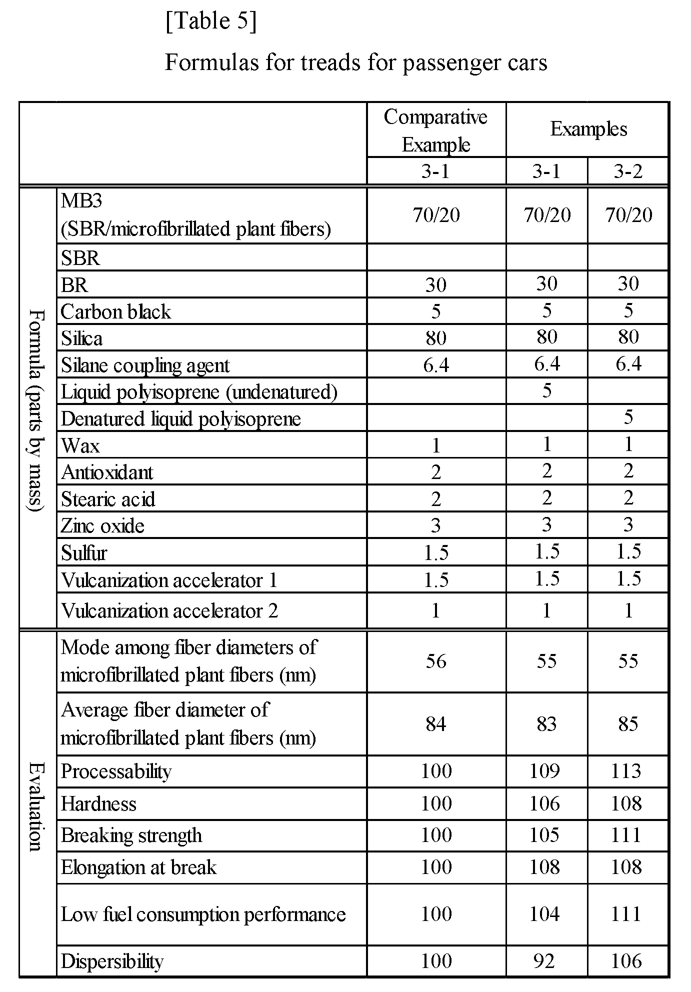

According to Tables 3 to 5, the microfibrillated plant fibers had favorable dispersibility, and the breaking strength, the elongation at break, and the low fuel consumption performance were also excellent in the Examples each containing the rubber component, the microfibrillated plant fibers, and the modifier capable of being covalently bonded to the microfibrillated plant fibers. On the other hand, the breaking strength, the elongation at break, and the low fuel consumption performance were inferior in the Comparative Examples which did not contain the modifier. In the Examples, the processability and the hardness were also favorable.

Provided are a tire rubber composition and the like that allow microfibrillated plant fibers to have excellent dispersibility and that enable improvement in tensile properties and low fuel consumption performance. The tire rubber composition contains: a rubber component; microfibrillated plant fibers; and a modifier capable of being covalently bonded to the microfibrillated plant fibers.

## Claims

1. A tire comprising a tire member formed from a tire rubber composition containing: a rubber component; microfibrillated plant fibers; and a modifier capable of being covalently bonded to the microfibrillated plant fibers, wherein the modifier has a reactive point that is reactive with diene rubber, wherein
an amount of the microfibrillated plant fibers per 100 parts by mass of the rubber component is 1 to 50 parts by mass, and
an amount of the modifier per 100 parts by mass of the rubber component is 2 to 20 parts by mass.

2. The tire according to claim 1, wherein the modifier is a liquid polymer.

3. The tire according to claim 2, wherein the liquid polymer is a denatured liquid polymer obtained by denaturation with an unsaturated carboxylic acid and/or a derivative thereof.

4. The tire according to any one of claims 1 to 3, wherein the plant fibers, the modifier, the vulcanization agent and the rubber component are bound to each other.

5. A method for producing a tire rubber composition, the method comprising the steps of:
kneading a rubber component, microfibrillated plant fibers, and a modifier capable of being covalently bonded to the microfibrillated plant fibers, to produce a kneaded product in which covalent bonds are formed between the modifier and the microfibrillated plant fibers; and
performing vulcanization.

6. The method according to claim 5, wherein the modifier has a reactive point that is reactive with diene rubber, and when the kneaded product and a vulcanization agent are kneaded and vulcanization is performed, the modifier covalently bonded to the microfibrillated plant fibers is further crosslinked with the rubber component via the vulcanization agent to form a material in which the plant fibers, the modifier, the vulcanization agent and the rubber component are bound to each other.

## Patentansprüche

1. Reifen, umfassend ein Reifenelement, das aus einer Reifenkautschukzusammensetzung gebildet ist, die enthält: eine Kautschukkomponente; mikrofibrillierte Pflanzenfasern; und einen Modifikator, der kovalent an die mikrofibrillierten Pflanzenfasern gebunden werden kann,
wobei der Modifikator einen Reaktionspunkt aufweist, der mit Dienkautschuk reaktiv ist,
wobei
eine Menge der mikrofibrillierten Pflanzenfasern pro 100 Masseteile der Kautschukkomponente 1 bis 50 Masseteile beträgt, und
eine Menge des Modifikators pro 100 Masseteile der Kautschukkomponente 2 bis 20 Masseteile beträgt.

2. Reifen nach Anspruch 1, wobei der Modifikator ein flüssiges Polymer ist.

3. Reifen nach Anspruch 2, wobei das flüssige Polymer ein denaturiertes flüssiges Polymer ist, das durch Denaturierung mit einer ungesättigten Carbonsäure und/oder einem Derivat davon erhalten ist.

4. Reifen nach einem der Ansprüche 1 bis 3, wobei die Pflanzenfasern, der Modifikator, das Vulkanisationsmittel und die Kautschukkomponente aneinander gebunden sind.

5. Verfahren zur Herstellung einer Reifenkautschukzusammensetzung, wobei das Verfahren die Schritte umfasst:
Kneten einer Kautschukkomponente, mikrofibrillierter Pflanzenfasern und eines Modifikators, der kovalent an die mikrofibrillierten Pflanzenfasern gebunden werden kann, um ein geknetetes Produkt herzustellen, in dem kovalente Bindungen zwischen dem Modifikator und den mikrofibrillierten Pflanzenfasern gebildet sind; und
Durchführung einer Vulkanisation.

6. Verfahren nach Anspruch 5, wobei der Modifikator einen Reaktionspunkt aufweist, der mit Dienkautschuk reaktiv ist, und wenn das geknetete Produkt und ein Vulkanisationsmittel geknetet werden und Vulkanisation durchgeführt wird, der an die mikrofibrillierten Pflanzenfasern gebundene Modifikator über das Vulkanisationsmittel weiter mit der Kautschuckomponente vernetzt, um ein Material zu bilden, in dem die Pflanzenfasern, der Modifikator, das Vulkanisationsmittel und die Kautschukkomponente aneinander gebunden sind.

## Revendications

1. Pneu comprenant un élément de pneu formé à partir d'une composition de caoutchouc pour pneu contenant : un composant caoutchouc ; des fibres végétales microfibrillées ; et un modifiant capable d'être lié de manière covalente aux fibres végétales microfibrillées, dans lequel dans lequel une quantité de fibres végétales microfibrillées par 100 parties en masse de composant caoutchouc est de 1 à 50 parties en masse, et une quantité de modifiant par 100 parties en masse de composant caoutchouc est de 2 à 20 parties en masse.

2. Pneu selon la revendication 1, dans lequel le modifiant est un polymère liquide.

3. Pneu selon la revendication 2, dans lequel le polymère liquide est un polymère liquide dénaturé obtenu par dénaturation avec un acide carboxylique insaturé et/ou un dérivé de celui-ci.

4. Pneu selon l'une quelconque des revendications 1 à 3, dans lequel les fibres végétales, le modifiant, l'agent de vulcanisation et le composant caoutchouc sont liés les uns aux autres.

5. Procédé pour produire une composition de caoutchouc pour pneu, le procédé comprenant les étapes de :
malaxage d'un composant caoutchouc, de fibres végétales microfibrillées, et d'un modifiant capable d'être lié de manière covalente aux fibres végétales microfibrillées, pour produire un produit malaxé dans lequel des liaisons covalentes sont formées entre le modifiant et les fibres végétales microfibrillées ; et
mise en œuvre d'une vulcanisation.

6. Procédé selon la revendication 5, dans lequel le modifiant a un point réactif qui est réactif vis-à-vis d'un caoutchouc de diène, et, lorsque le produit malaxé et un agent de vulcanisation sont malaxés et une vulcanisation est mise en œuvre, le modifiant lié de manière covalente aux fibres végétales microfibrillées est en outre réticulé avec le composant caoutchouc via l'agent de vulcanisation pour former un matériau dans lequel les fibres végétales, le modifiant, l'agent de vulcanisation et le composant caoutchouc sont liés les uns aux autres.
